# EUROPÄISCHE PATENTSCHRIFT

(11) **EP 4 378 718 B1**
(45) Veröffentlichungstag und Bekanntmachung des Hinweises auf die Patenterteilung: **01.10.2025**
(21) Anmeldenummer: 22210563.7
(22) Anmeldetag: 30.11.2022
(51) Int. Cl.: B60G 7/00, B60G 7/02, B62D 17/00, B21D 35/00, B21D 22/00, B21D 17/02, B21D 22/04, B21D 53/88

(54) **VERFAHREN ZUR HERSTELLUNG EINES FAHRWERKBAUTEILS**
METHOD FOR PRODUCING A CHASSIS COMPONENT
PROCÉDÉ DE FABRICATION D'UN ÉLÉMENT DE CHÂSSIS

(43) Veröffentlichungstag der Anmeldung: 05.06.2024
(73) Patentinhaber: Benteler Automobiltechnik GmbH, 33102 Paderborn (DE)
(72) Erfinder: VINGNESENGEN, Lars Erik, 2819 Gjøvik (NO); HOLMGREN, Tom, 2825 Gjøvik (NO)
(74) Vertreter: Ksoll, Peter

(56) Entgegenhaltungen:
- EP-A1- 2 783 947
- EP-A1- 2 910 454
- DE-A1- 102016 121 131
- DE-A1- 102020 007 875
- DE-A1- 19 758 003
- JP-A- H06 247 336
- KR-A- 20160 140 179

## Beschreibung

Die vorliegende Erfindung betrifft ein Verfahren zur Herstellung eines Fahrwerkbauteils gemäß den Merkmalen im Anspruch 1.

Fahrwerkbauteile, die insbesondere der Führung und Stabilisierung der mit einem Rad des Kraftfahrzeuges verbundenen Radaufhängung dienen, sind mechanisch mit der Radaufhängung und dem Chassis des Kraftfahrzeuges verbunden. Ein solches Fahrwerkbauteil ist insbesondere ein Federlenker. Um entsprechende Fahrwerkbauteile bei der Montage genau justieren und ausrichten zu können und um beispielsweise die Spur oder den Sturz der Räder des Kraftfahrzeuges einzustellen, kann die mechanische Verbindung über einen Exzentermechanismus erfolgen.

Fahrwerkbauteile mit einem entsprechenden Exzentermechanismus weisen zumeist eine Öffnung und zwei an gegenüberliegenden Seiten der Öffnung angeordnete Führungselemente zum Führen eines Exzenterelementes auf. Das Exzenterelement ist aus einer Exzenterscheibe oder Exzenterschraube ausgebildet, die einen Bund aufweisen, der bezüglich der Drehachse des Exzenterelementes exzentrisch angeordnet ist. Der Bund des Exzenterelementes steht mit den Führungselementen in Kontakt. Die Öffnung im Fahrwerkbauteil ist dabei üblicherweise als Langloch ausgeführt, so dass das Fahrwerkbauteil, insbesondere der Federlenker, durch die Führungselemente bei einer Drehung des Exzenterelementes weiter nach Fahrzeugaußen bzw. nach Fahrzeuginnen verschoben wird.

Entsprechende Exzenteranordnungen sind grundsätzlich im Stand der Technik bekannt. So offenbart die US 11 338 635 B2 einen mehrschenkeligen Lenker für eine Radaufhängung in einem Fahrzeug, wobei eine Exzenterscheibe eines entsprechenden Exzentermechanismus dazu ausgebildet ist, an Führungselementen anzuliegen, um den Lenker bezüglich eines Achsträgers und/oder Radträgers bei Drehung der Exzenterscheibe zu führen und so den Lenksturz und/oder Spur festzulegen. Die Führungselemente sind einstückig aus dem Material eines Lenkerarms geformt und weisen eine rechteckige Form mit abgerundeten Enden auf. Aufgrund der Form der Führungselemente wird ein hoher Druck für den Formvorgang benötigt. Durch den hohen Druck können durch den Formvorgang Klemmfugen oder andere Beschädigungen am Bauteil zurückbleiben, was insbesondere die Lebensdauer des Fahrwerkbauteils reduzieren kann.

Auch die US 11 260 715 B2 zeigt einen entsprechenden Exzentermechanismus mit Führungselementen. Die Führungselemente sind hier schneidtechnisch geschlitzt ausgeführt, was sich negativ auf die Lebensdauer des Bauteils auswirken kann und die Gefahr der Rissbildung innerhalb der Führungselemente erhöht.

Die EP 2 910 454 A1 offenbart ein Fahrwerksbauteil mit einer aus formbarem Grundmaterial hergestellten Halterung, die mindestens ein Langloch zur Aufnahme eines Verbindungsbolzen zur Anbindung eines Lenkerarms und mindestens einen Anschlag für eine mit dem Verbindungsbolzen drehstarr verbundene oder drehstarr verbindbare Exzenterscheibe aufweist.

Die KR 2016 0140179 A, die den Oberbegriff des Anspruchs 1 zeigt, offenbart eine Montagevorrichtung, die einen mit einer Fahrzeugkarosserie gekoppelten Elementabschnitt umfasst.

Aus der EP 2 783 947 A1 ist eine Einstelleinrichtung zur Einstellung eines Radlenkers oder einer Spurstange an einem Kraftfahrzeug, sowie Achsträger mit wenigstens einer solchen Einstelleinrichtung bekannt.

Weiterer Stand der Technik wir durch die JP H06 247336 A, DE 10 2020 007875 A1, DE 10 2016 121131 A1 und die DE 197 58 003 A1 gebildet.

Die Aufgabe der vorliegenden Erfindung ist es, ein Verfahren zur Herstellung eines Fahrwerkbauteils mit Führungselementen aufzuzeigen, welches eine höhere Lebensdauer erreicht und kostengünstig in der Herstellung ist.

Die zuvor genannte Aufgabe wird mit einem Verfahren zur Herstellung eines Fahrwerkbauteils gemäß den Merkmalen im Patentanspruch 1 gelöst.

Vorteilhafte Ausführungsvarianten der vorliegenden Erfindung sind Bestandteil der abhängigen Ansprüche.

Ein Fahrwerkbauteil, welches bevorzugt ein Querlenker und insbesondere ein Federlenker ist, weist einen Grundkörper auf, wobei der Grundkörper bevorzugt ein Lenkerarm des Federlenkers ist. Der Grundkörper weist ferner eine Öffnung zum Durchführen eines Befestigungsmittels auf. An den gegenüberliegenden Seiten der Öffnung sind zwei Führungselemente zum Führen eines Exzenterelementes angeordnet. Die Führungselemente sind durch mechanische Bearbeitung einstückig und materialeinheitlich aus dem Grundkörper des Fahrwerkbauteils gebildet. Durch diese Ausgestaltung ist die Herstellung der Führungselemente besonders einfach und kostengünstig zu bewerkstelligen, da kein separates Bauteil erforderlich ist und die Führungselemente aus dem Material des Fahrwerkbauteils in einfacher Weise ausgeformt werden. Durch die Einstückigkeit und Materialeinheit ist ein zusätzliches Befestigen der Führungselemente nicht erforderlich. Dadurch kann vermieden werden, dass diese im fertiggestellten Fahrwerkbauteil verrutschen oder sich lösen, wie es bei Verwendung eines separaten Bauteils möglich wäre. So wird die Lebensdauer des Bauteils deutlich erhöht und die Einstellung für Spur und/oder Sturz dauerhaft sichergestellt.

Die Führungselemente weisen jeweils eine Rückseite sowie eine der Öffnung zugewandte Kontaktseite auf. Die Kontaktseite ist dabei orthogonal zum Grundkörper ausgerichtet. Über die Kontaktseiten kommen die Führungselemente mit dem Exzenterelement in Kontakt und sorgen so für eine Verlagerung des Fahrwerkbauteils bei entsprechender Drehung des Exzenterelementes. Bei der Drehung des Exzenterelementes wird dabei eine Kraft über die Kontaktseiten auf die Führungselemente übertragen.

Zwischen den jeweiligen Kontaktseiten und dem Grundkörper ist ein äußerer Übergangsbereich mit einem Radius ausgebildet ist. Durch die von den Exzenterelementen übertragene Kraft sind die Führungselemente einer hohen Belastung ausgesetzt. Insbesondere im Übergangspunkt zwischen Kontaktseite und Grundkörper kommt es aufgrund dieser Belastung häufig zur Rissbildung. Die Lebensdauer des Fahrwerkbauteils ist somit reduziert. Der Übergangsbereich zwischen den Kontaktseiten und dem Grundkörper erhöht zunächst die Materialstärke in diesem kritischen Bereich. Überraschenderweise hat sich weiterhin gezeigt, dass die Ausbildung des Übergangsbereichs mit einem Radius, der die Kontaktseiten mit dem Grundkörper verbindet, die Gefahr einer Rissbildung deutlich reduziert. Somit ist die Lebensdauer des Fahrwerkbauteils erhöht. Durch den ausgebildeten Radius wird zudem ein sicherer Sitz zwischen Kontaktseite und Exzenterelement gewährleistet. Zudem eignet sich die Form des Übergangsbereichs zur kostengünstigen Herstellung des Fahrwerkbauteils durch Materialverlagerung des Fahrwerkbauteils aus dem Grundkörper.

Der Radius des äußeren Übergangsbereichs liegt bevorzugt zwischen 0,2 mm und 2 mm, besonders bevorzugt zwischen 0,5 mm und 1,5 mm. Eine entsprechende Dimensionierung hat sich als besonders Vorteilhaft für die Stabilität der Führungselemente erwiesen.

Vorzugsweise verjüngen sich die Rückseiten der Führungselemente in entgegengesetzter Richtung zu den Kontaktseiten und gehen in den Grundkörper über. Dies hat mehrere Vorteile. Aufgrund der Verjüngung der Rückseiten und dem Übergang in den Grundkörper können die Führungselemente sehr platzsparend ausgeführt werden. Die Führungselemente können auf dem Grundkörper eine Gesamtfläche von unter 20 mm², bevorzugt zwischen 4 und 18 mm², besonders bevorzugt zwischen 6 und 15 mm² einnehmen. Überraschenderweise hat sich gezeigt, dass diese Formgebung der Führungselemente trotz der geringen Fläche einer Materialermüdung entgegenwirkt. Durch die Form der Führungselemente wird der Faserverlauf des Materials nicht unterbrochen, was insbesondere zu einer geringen Neigung zur Rissbildung führt. Aufgrund der materialeinheitlichen Verjüngung der Rückseiten mit einem entsprechenden Übergang in den Grundkörper, sind die Führungselemente zudem äußerst robust. Die von dem Exzenterelement übertragene Kraft kann durch die Formgebung der Führungselemente sehr gut auf den Grundkörper übertragen werden. Die Formgebung der Führungselemente eignet sich zudem zur kostengünstigen Herstellung des Fahrwerkbauteils durch Materialverlagerung des Fahrwerkbauteils aus dem Grundkörper.

Vorzugsweise weisen die Kontaktseiten eine plankonvexe Form auf. Die plankonvexe Form der orthogonal zum Grundkörper ausgerichteten Kontaktseiten bildet eine optimale Anlage für das Exzenterelement und verhindert insbesondere ein Durchrutschen des Exzenterelementes.

Alternativ kann die von dem Grundkörper abgewandte Seite der Kontaktseite einen zumindest abschnittsweise abgeflachten Bereich aufweisen, der parallel zum Grundkörper verläuft. So kann die Höhe der Kontaktseiten und damit die Höhe der Führungselemente möglichst gering ausgeführt werden, ohne die Anlagefläche für das Exzenterelement zu reduzieren. Der abgeflachte Bereich kann dabei vollständig flach sein, oder aber weniger gekrümmt sein, so dass sich eine insgesamt flachere Anlagefläche ergibt, als bei einer plankonvexen Ausbildung der Kontaktseite.

Bevorzugt weist der Grundkörper unterhalb der Führungselemente eine Einbuchtung auf. Dabei weist die Einbuchtung eine Frontseite und eine Oberseite auf, wobei die Frontseite parallel zur Kontaktseite angeordnet ist. Eine entsprechende Einbuchtung wird insbesondere durch das Herstellungsverfahren der Führungselemente ausgebildet, da das Material des Grundkörpers, beispielsweise durch einen Stempel, nach außen verlagert wird. Im Rahmen der Erfindung ist erkannt worden, dass eine parallele Ausrichtung der Frontseite mit der Kontaktseite zu einer erhöhten Stabilität zwischen den Führungselementen und dem Grundkörper führt, was sich vorteilhaft auf den Kraftfluss und die Lebensdauer des Fahrwerkbauteils auswirkt.

Vorzugsweise ist zwischen der Frontseite und der Oberseite ein innerer Übergangsbereich mit einem Radius angeordnet. Der Übergangsbereich erhöht die Stabilität der Führungselemente und reduziert die Rissgefahr am Kontaktpunkt zwischen der Frontseite und der Oberseite.

Der Grundkörper weist im Bereich der Öffnung eine Unterseite auf. Zwischen der Frontseite und der Unterseite kann ein unterer Übergangsbereich mit einem Radius ausgebildet sein. Das Fahrwerkbauteil kann so ausgeführt sein, dass der innere Übergangsbereich direkt in den unteren Übergangsbereich übergeht. In diesem Fall ist keine separate Frontseite zwischen den Übergangsbereichen ausgebildet.

Besonders bevorzugt ist zwischen der parallel verlaufenden Frontseite und der Kontaktseite ein orthogonaler Abstand ausgebildet, der zwischen 10 % und 50 % der Materialstärke des Grundkörpers entspricht. So wird eine ausreichende Materialstärke zwischen der Kontaktseite und der Frontseite sichergestellt, so dass eine ausreichende Stabilität der Führungselemente gegeben ist. Gleichzeitig wird durch den Abstand zwischen der Frontseite und der Kontaktseite eine optimale Form bzw. Größe der Führungselemente erreicht. Der Abstand entspricht insbesondere zwischen 20 % und 40 % der Materialstärke des Grundkörpers und besonders bevorzugt zwischen 25 % und 35 % der Materialstärke des Grundkörpers.

Vorzugsweise ist in einem mittleren vertikalen Querschnitt der Führungselemente ein Abstand zwischen dem äußeren Übergangsbereich und dem inneren Übergangsbereich ausgebildet, der zwischen 30 % und 80 % der Materialstärke des Grundkörpers entspricht. Es handelt sich dabei um den kürzesten Abstand zwischen dem inneren Übergangsbereich und dem äußeren Übergangsbereich. Hier hat sich im Rahmen der Erfindung gezeigt, dass insbesondere dieser Abstand eine hohe Robustheit und Lebensdauer der Führungselemente ermöglicht. Insbesondere führt ein Abstand zu einem stabilen Materialgefüge mit geringer Rissgefahr. Der Faserverlauf des Materials wird durch den Abstand zwischen den Übergangsbereichen nicht unterbrochen. Bevorzugt liegt der Abstand zwischen 40 % und 60 % der Materialstärke des Grundkörpers und besonders bevorzugt zwischen 45 % und 55 % der Materialstärke des Grundkörpers. Dieser Abstand wird maßgeblich durch das Vorhandensein des Radius des äußeren Übergangsbereichs sowie des Radius des inneren Übergangsbereichs mitbestimmt.

In einer vorteilhaften Ausführungsvariante ist das Fahrwerkbauteil aus einem Leichtmetallwerkstoff, insbesondere aus einer Aluminiumlegierung ausgebildet. So wird das Gewicht des Fahrwerkbauteils reduziert, was sich vorteilhaft auf die Fahreigenschaften sowie auf den Verbrauch des Kraftfahrzeuges auswirkt.

Vorzugsweise ist das Fahrwerkbauteil ein Strangpressprofil. So können auch Fahrwerkbauteile mit komplexen und unregelmäßigen Formen hergestellt werden.

Besonders bevorzugt sind die Führungselemente kaltgeformt. Dies ermöglicht kurze Bearbeitungszeiten, eine gute Oberflächenqualität, enge Maßtoleranzen, eine optimale Materialausnutzung sowie eine dauerhafte Verfestigung des Werkstoffs. Auch der Faserverlauf des Materials wird nicht unterbrochen. Durch die Kaltumformung bleibt die kontinuierliche Struktur des Materials erhalten, ohne dass eine Tendenz zur Rissbildung entsteht. Aufgrund der Verschiebung bzw. Materialverlagerung anstelle eines Einschnittes und des damit verbundenen im Wesentlichen ununterbrochenen Faserverlaufs, wird ein schnittbedingter Bruchanteil in der Kontaktseite vermieden und die Gefahr der Entstehung und des Wachstums von Rissen beim Herstellen des Fahrwerkbauteils, vor allem in dessen Einsatzdauer, reduziert.

In einer bevorzugten Variante weisen die Kontaktseiten eine Höhe auf, die kleiner oder gleich der Materialstärke des Grundkörpers ist. Da die Führungselemente einstückig und materialeinheitlich aus dem Grundkörper des Fahrwerkbauteils gebildet sind, wird so sichergestellt, dass die Materialstärke der Führungselemente ausreichend für die Belastung durch das Exzenterelement ist.

Die Öffnung im Grundkörper des Fahrwerkbauteils ist insbesondere ein Langloch. Durch ein entsprechendes Langloch ist eine Verlagerung des Fahrwerkbauteils relativ zum Exzenterelement möglich.

Das erfindungsgemäße Verfahren zur Herstellung eines Fahrwerkbauteils umfasst die folgenden Verfahrensschritte:
- Bereitstellen eines Fahrwerkbauteilvorläufers, welcher einen Grundkörper aufweist,
- Einlegen des Grundkörpers in ein Umformwerkzeug zum Formen von Führungselementen, wobei das Umformwerkzeug einen Stempel, ein Untergesenk und ein Fixierelement aufweist, wobei das Untergesenk den zu formenden Führungselementen entsprechende Formausnehmungen aufweist,
- Formen der Führungselemente durch linearen Vorschub des Stempels, wobei der Stempel in einem Winkel α zwischen 30° und 60° zum Grundkörper ausgerichtet ist und der Formvorgang bei einem Druck zwischen 5 t und 20 t erfolgt, um das Fahrwerkbauteil zu erhalten.

Bei dem Fahrwerkbauteilvorläufer handelt es sich bevorzugt um einen Querlenker, insbesondere um einen Federlenker.

Bevorzugt weist das Fahrwerkbauteil zwei gegenüberliegende Federarme mit jeweils einem Grundkörper auf, wobei beim Umformvorgang beide Grundkörper gleichzeitig mit entsprechenden Führungselementen versehen werden.

Besonders bevorzugt ist der Fahrwerkbauteilvorläufer aus einer Aluminiumlegierung ausgebildet und ein Strangpressprofil.

Vorzugsweise weist der Grundkörper bereits eine Öffnung zum Durchführen eines Befestigungsmittels auf, so dass die Führungselemente an gegenüberliegenden Seiten der Öffnung zum Führen eines Exzenterelementes geformt werden können.

Alternativ kann im Grundkörper eine Öffnung zum Durchführen eines Befestigungsmittels zeitgleich mit den Führungselementen erzeugt werden, wobei die Führungselemente auch hier an gegenüberliegenden Seiten der Öffnung angeordnet sind. So können in dieser Ausführungsvariante zwei Umformschritte in einem durchgeführt werden, was das Herstellungsverfahren beschleunigt.

Das Formen der Führungselemente erfolgt bevorzugt durch einen Kaltformvorgang. Dies ermöglicht kurze Bearbeitungszeiten, eine gute Oberflächenqualität, enge Maßtoleranzen, eine optimale Materialausnutzung sowie eine dauerhafte Verfestigung des Werkstoffs. Auch der Faserverlauf des Materials wird nicht unterbrochen.

Zunächst wird der Grundkörper in das Umformwerkzeug eingelegt, so dass er auf dem Untergesenk aufliegt. Durch das Fixierelement wird der Grundkörper auf dem Untergesenk fixiert. In einem nächsten Schritt werden die Führungselemente durch linearen Vorschub des Stempels geformt. Dazu presst der Stempel das Material des Grundkörpers in die entsprechenden Formausnehmungen. Durch die erfindungsgemäße schräge Ausrichtung des Stempels zum Grundkörper wird dabei im Vergleich zu herkömmlichen Fertigungsverfahren nur ein geringer Druck benötigt. Dieser liegt zwischen 5 t und 20 t, bevorzugt zwischen 7,5 t und 13 t. Durch den geringeren Druck können Energiekosten eingespart werden. Außerdem wird sowohl das Umformwerkzeug als auch der Fahrwerkbauteilvorläufer weniger belastet. Zusätzlich wird durch den geringen Druck das Material des Grundkörpers durch das Umformwerkzeug nicht beschädigt, so dass hier keine etwaigen Schwachstellen im Material zurückbleiben. Die schräge Ausrichtung des Stempels führt zudem zu einem vorteilhaften Faserverlauf innerhalb des Materials, was eine hohe Robustheit der Führungselemente ermöglicht. Insbesondere am Übergang zwischen Grundkörper und Führungselement besteht so nur eine äußerst geringe Rissgefahr. Weiterhin ist kein Schnitt des Materials erforderlich, was ebenfalls die Robustheit und die Festigkeit der Führungselemente verbessert.

Der Kopf des Stempels ist vorzugsweise derart ausgebildet, dass durch den Formvorgang die Kontaktseiten der Führungselemente eine plankonvexe Form aufweisen und sich die Rückseiten in entgegengesetzter Richtung zu den Kontaktseiten verjüngen und in den Grundkörper übergehen. Entsprechend sind auch die Formausnehmungen des Untergesenks ausgebildet.

Besonders bevorzugt ist der Kopf des Stempels derart ausgebildet, dass durch den Formvorgang zwischen der Frontseite und der Oberseite ein innerer Übergangsbereich mit einem Radius ausgebildet ist. Die Formausnehmungen des Untergesenks sind vorzugsweise derart ausgebildet, dass durch den Formvorgang zwischen der Kontaktseite und dem Grundkörper ein äußerer Übergangsbereich mit einem Radius ausgebildet ist.

Die Oberflächen der Führungselemente können nach dem Formvorgang poliert werden. Dies erhöht zusätzlich die Lebensdauer des Fahrwerkbauteils.

Weitere Vorteile, Merkmale, Eigenschaften und Aspekte der vorliegenden Erfindung sind Bestandteil der folgenden Beschreibung. Bevorzugte Ausführungsformen werden in den schematischen Figuren dargestellt. Diese dienen dem einfachen Verständnis der Erfindung. Es zeigen:
- Figur 1a): ein Fahrwerkbauteil in Seitenansicht;
- Figur 1b): eine Detailansicht eines Fahrwerkbauteils;
- Figur 2: ein Fahrwerkbauteil in Draufsicht;
- Figur 3a): ein Fahrwerkbauteil in einer Perspektive;
- Figur 3b): eine Detailansicht eines Führungselementes gemäß dem Schnitt B-B der Figur 2;

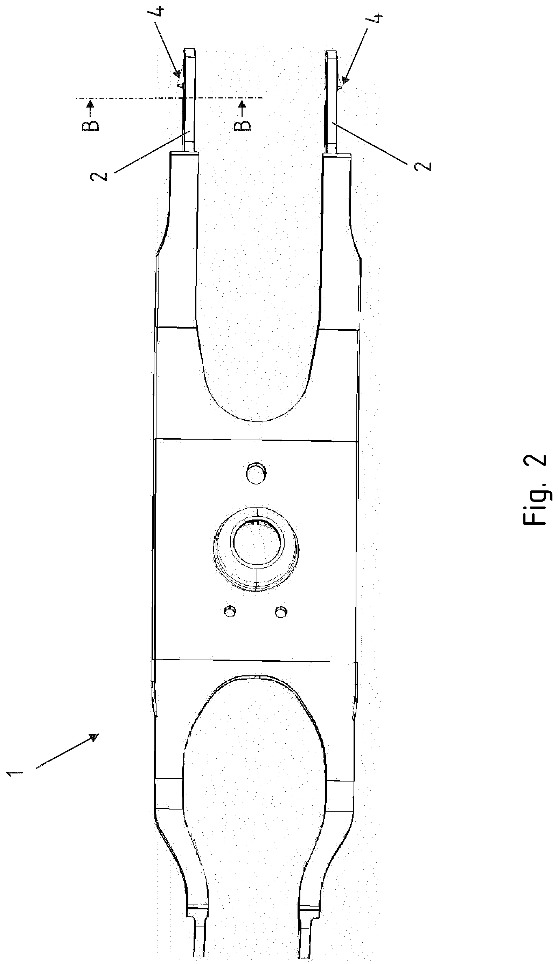

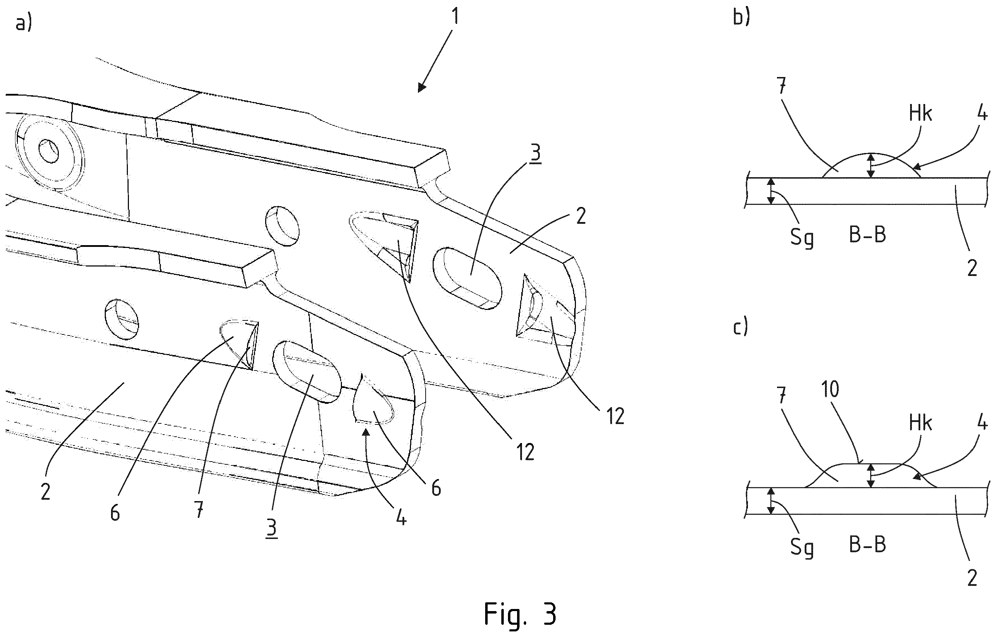

- Figur 3 c): eine alternative Ausführungsvariante eines Führungselementes gemäß dem Schnitt B-B der Figur 2;

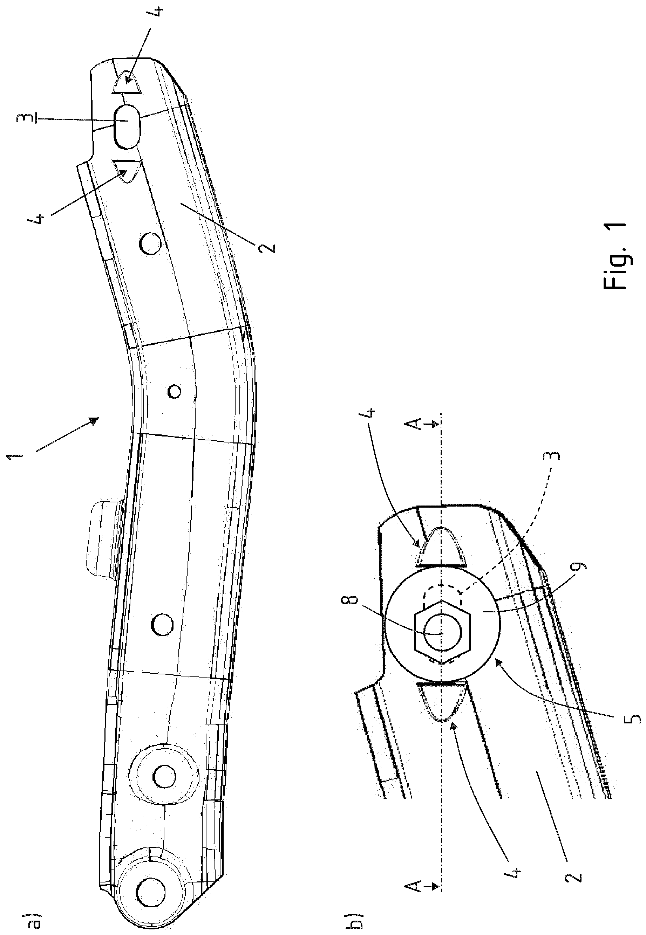

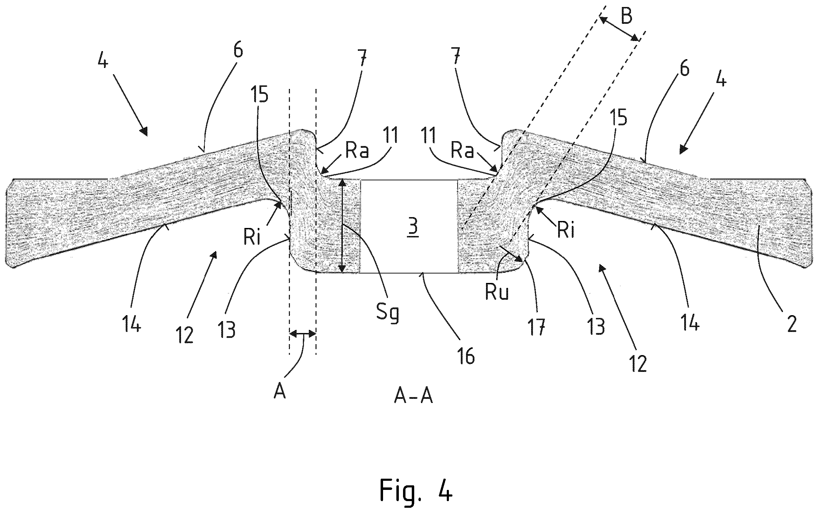

- Figur 4: ein Führungselement gemäß dem Schnitt A-A der Figur 1b);

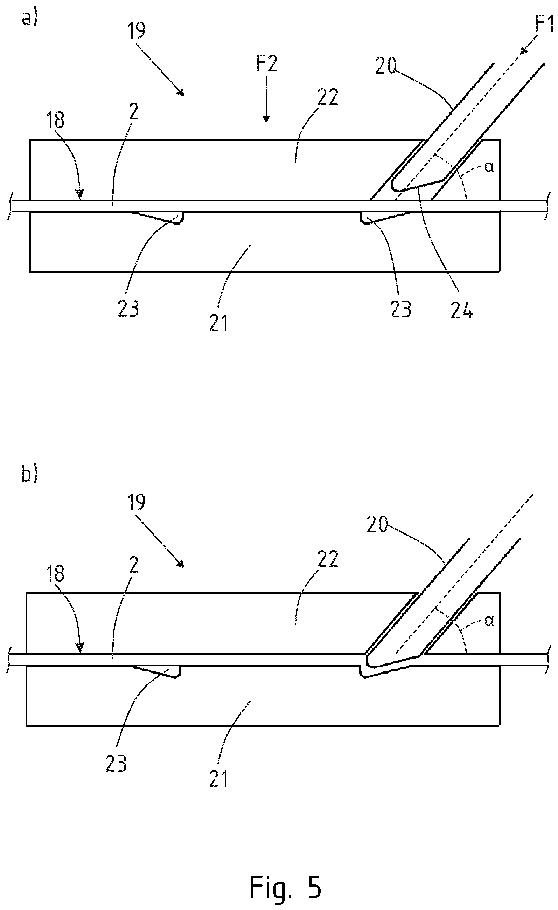

- Figur 5a): ein erfindungsgemäßes Herstellungsverfahren zur Herstellung eines Fahrwerkbauteils in Ausgangslage und
- Figur 5b): ein erfindungsgemäßes Herstellungsverfahren zur Herstellung eines Fahrwerkbauteils mit Stempelvorschub.

In den Figuren werden für gleiche oder ähnliche Bauteile dieselben Bezugszeichen verwendet, auch wenn eine wiederholte Beschreibung aus Vereinfachungsgründen entfällt.

Die Figuren 1, 2 und 3a) zeigen ein Fahrwerkbauteil 1, bei dem es sich insbesondere um einen Federlenker handelt. Das Fahrwerkbauteil weist zwei gegenüberliegende Grundkörper 2 auf, die den Lenkerarmen des Federlenkers entsprechen. Der Grundkörper 2 weist eine Öffnung 3 zum Durchführen eines Befestigungsmittels auf. An den gegenüberliegenden Seiten der Öffnung 3 sind zwei Führungselemente 4 zum Führen eines Exzenterelementes 5 angeordnet, siehe Figur 1b). Die Führungselemente 4 sind durch mechanische Bearbeitung einstückig und materialeinheitlich aus den Grundkörper 2 des Fahrwerkbauteils 1 gebildet. Die Führungselemente 4 weisen jeweils eine Rückseite 6 und eine der Öffnung 3 zugewandte Kontaktseite 7 auf. Die Kontaktseite 7 ist orthogonal zum Grundkörper 2 ausgebildet. Die Öffnung 3 ist in Form eines Langlochs ausgebildet.

Das Exzenterelement 5 weist eine Exzenterschraube 8 mit einem äußeren Bund 9 auf. Durch die Führungselemente 4 wird der äußere Bund 9 des Exzenterelementes 5 geführt, dergestalt, dass bei einer Drehung des Exzenterelementes 5 sich die Exzenterschraube 8 innerhalb der Öffnung 3 bewegt und somit das Fahrwerkbauteil 1 verschoben wird.

Gemäß der perspektivischen Ansicht des Fahrwerkbauteils 1 in Figur 3a) ist zu erkennen, dass die Kontaktseiten 7 eine plankonvexe Form aufweisen und sich die Rückseiten 6 in entgegengesetzter Richtung zu den Kontaktseiten 7 verjüngen und in den Grundkörper 2 übergehen. Diese Ausgestaltung der Führungselemente 4 sorgt für eine verbesserte Robustheit der Führungselemente 4, ermöglicht eine möglichst platzsparende Ausführung der Führungselemente 4 und ist eine optimale Form für die Kraftübertragung von dem Exzenterelement 5 auf den Grundkörper 2.

Figur 3b) zeigt die Führungselemente 4 und den Grundkörper 2 gemäß dem Schnitt B-B der Figur 2. Bevorzugt weisen die plankonvex geformten Kontaktseiten 7 der Führungselemente 4 eine Höhe Hk auf, die kleiner oder gleich der Materialstärke Sg des Grundkörpers 2 ist. So ist sichergestellt, dass die Führungselemente 4 immer eine ausreichende Materialstärke aufweisen.

Figur 3c) zeigt eine alternative Ausführungsvariante der Führungselemente 4. Die von dem Grundkörper 2 abgewandte Seite der Kontaktseite 4 weist einen zumindest abschnittsweise abgeflachten Bereich 10 auf, der parallel zum Grundkörper 2 verläuft. So kann die Höhe Hk der Kontaktseiten 7 und damit der Führungselemente 4 möglichst gering ausgeführt werden, ohne die Anlagefläche für das Exzenterelement 5 zu reduzieren.

Die Führungselemente 4 im Schnitt A-A der Figur 1b) sind in Figur 4 gezeigt. Zwischen den jeweiligen Kontaktseiten 7 und dem Grundkörper 2 ist ein äußerer Übergangsbereich 11 mit einem Radius Ra ausgebildet. Der Übergangsbereich 11 erhöht die Materialstärke zwischen den Kontaktseiten 7 und dem Grundkörper 2. Durch den Radius Ra, der die Kontaktseiten 7 mit dem Grundkörper 2 verbindet, ist die Gefahr einer Rissbildung deutlich reduziert. Somit ist die Lebensdauer des Fahrwerkbauteils 1 erhöht.

Der Radius Ra liegt bevorzugt zwischen 0,2 mm und 2 mm, besonders bevorzugt zwischen 0,5 mm und 1,5 mm.

Der Grundkörper 2 weist jeweils unterhalb der Führungselemente 4 eine Einbuchtung 12 auf, wie in Figur 3a) und Figur 4 zu sehen ist. Die Einbuchtung 12 entsteht durch die mechanische Formung der Führungselemente 4. Die Einbuchtungen 12 weisen eine Frontseite 13 und eine Oberseite 14 auf, wobei die Frontseite 13 parallel zur Kontaktseite 7 angeordnet ist. Hier hat sich gezeigt, dass eine entsprechend parallele Anordnung der Frontseiten 13 mit den Kontaktseiten 7 zu einer verbesserten Stabilität und Robustheit der Führungselemente 4 führt.

Zwischen der parallel verlaufenden Frontseite 13 und der Kontaktseite 7 ist ein orthogonaler Abstand A ausgebildet, der zwischen 10 % und 50 % der Materialstärke Sg des Grundkörpers 2 entspricht. Besonders bevorzugt beträgt der Abstand A zwischen 20 % und 40 % und besonders bevorzugt zwischen 25 % und 35 % der Materialstärke Sg des Grundkörpers 2. Durch diesen Abstand A wird eine ausreichende Materialstärke zwischen der Frontseite 13 und der Kontaktseite 7 sichergestellt, was die Robustheit und Lebensdauer der Führungselemente 4 sicherstellt.

Zwischen der Frontseite 13 und der Oberseite 14 kann ein innerer Übergangsbereich 15 mit einem Radius Ri angeordnet sein. Durch den inneren Übergangsbereich 15 ist die Stabilität der Führungselemente 4 erhöht und zusätzlich die Rissgefahr beim Übergang zwischen der Frontseite 13 und der Oberseite 14 reduziert.

Der mittlere vertikale Querschnitt der Führungselemente 4, wie im Schnitt A-A der Figur 4 gezeigt, weist einen Abstand B zwischen dem äußeren Übergangsbereich 11 und dem inneren Übergangsbereich 15 auf. Der Abstand B liegt insbesondere zwischen 30 % und 70 % der Materialstärke Sg des Grundkörpers 2. Bevorzugt liegt der Abstand B zwischen 40 % und 60 % und besonders bevorzugt zwischen 45 % und 55 % der Materialstärke Sg des Grundkörpers 2. Bei dem Abstand B handelt es sich somit um den geringsten Abstand zwischen der dem äußeren Übergangsbereich 11 und dem inneren Übergangsbereich 15. Durch eine entsprechende Länge des Abstands B wird eine ausreichende Materialstärke sichergestellt, was die Robustheit und die Lebensdauer der Führungselemente 4 erhöht. Es ist kein Scherschnitt erforderlich, so dass die Rissgefahr reduziert wird. Zusätzlich kann durch den Abstand B sichergestellt werden, dass die Fasern innerhalb der Materialstruktur nicht beschädigt werden und somit die Materialstärke voll erhalten bleibt. Der ununterbrochene verlauf der Fasern des Materials ist in Figur 4 zu sehen.

Der Grundkörper 2 weist im Bereich der Öffnung 3 eine Unterseite 16 auf. Zwischen der Frontseite 13 und der Unterseite 16 kann ein unterer Übergangsbereich 17 mit einem Radius ausgebildet sein.

In einer alternativen Ausführungsvariante kann das Fahrwerkbauteil 1 so ausgeführt sein, dass der innere Übergangsbereich 15 direkt in den unteren Übergangsbereich 17 übergeht. In diesem Fall ist keine separate Frontseite 13 zwischen den Übergangsbereichen 15, 17 ausgebildet.

Das Fahrwerkbauteil 1 ist bevorzugt aus einer Aluminiumlegierung ausgebildet und ist ein Strangpressprofil.

Die Führungselemente 4 sind kaltgeformt. Dies ermöglicht kurze Bearbeitungszeiten, eine gute Oberflächenqualität, enge Maßtoleranzen, eine optimale Materialausnutzung sowie eine dauerhafte Verfestigung des Werkstoffs. Auch der Faserverlauf des Materials wird nicht unterbrochen.

Wie in den Figuren 1 und 3 gezeigt, ist die Öffnung als Langloch ausgebildet. Durch das Langloch wird eine entsprechende Bewegung des Fahrwerkbauteils 1 durch das Exzenterelement 5 ermöglicht.

Figuren 5a) und b) veranschaulichen das Verfahren zur Herstellung eines Fahrwerkbauteils 1, wobei das Verfahren die folgenden Verfahrensschritte umfasst:
- zunächst wird ein Fahrwerkbauteilvorläufer 18 bereitgestellt, bei dem es sich insbesondere um einen Federlenkervorläufer handelt. Dieser Fahrwerkbauteilvorläufer weist einen Grundkörper 2 auf, der insbesondere dem Lenkerarm des Federlenkervorläufers entspricht.
- Der Grundkörper 2 des Fahrwerkbauteilvorläufers 18 wird anschließend in ein Umformwerkzeug 19 eingelegt, um die Führungselemente 4 zu formen. Das Umformwerkzeug 19 weist einen Stempel 20, ein Untergesenk 21 und ein Fixierelement 22 auf, wobei das Untergesenk 21 den zu formenden Führungselementen 4 entsprechende Formaushebungen 23 aufweist. Durch das Fixierelement 22 wird der Grundkörper 2 mit einer Kraft F2 auf das Untergesenk 21 gepresst und anhand der Form der Formaushebungen 23 und der Form des Stempelkopfes 24 wird die Formgebung der zu formenden Führungselemente 4 festgelegt.
- Das Formen der Führungselemente 4 erfolgt durch einen linearen Vorschub des Stempels 20 mit einer Kraft F1, wobei der Stempel 20 in einem Winkel α zwischen 30° und 60° zum Grundkörper 2 ausgerichtet ist. Nach dem Formungsvorgang erhält man das fertige Fahrwerkbauteil 1.

Durch den erfindungsgemäßen Winkel α zwischen Stempel 20 und Grundkörper 2 bedarf es nur eines geringen Drucks um die Führungselemente 4 zu formen. Der Druck für den Formvorgang liegt zwischen 5 t und 20 t, insbesondere zwischen 7,5 t und 13 t. Im Vergleich zu ähnlichen Formverfahren zur Herstellung von Führungselementen 4 handelt es sich hierbei um einen äußerst geringen Druck. Dies hat zum einen den Vorteil, dass weniger Energie für den Formungsvorgang benötigt wird, zum anderen verbleiben durch den geringen Anpressdruck keine ungewollten Einkerbungen oder anderweitige Beschädigungen am Grundkörpers 2, die von dem Umformwerkzeug 19 stammen. Die schräge Ausrichtung des Stempels 20 ermöglicht es weiterhin eine für die Stabilität der Führungselemente 4 optimale Materialgefügestruktur durch den Formvorgang zu erhalten. Insbesondere die Materialfasern bleiben erhalten, so dass die Materialstruktur und damit die Robustheit und Stärke des Materials nicht beeinträchtigt wird.

Der Stempel 20 weist einen Stempelkopf 24 auf. Vorzugsweise ist dieser derart ausgebildet, dass durch den Formvorgang die Kontaktseiten 7 der Führungselemente 4 eine plankonvexe Form aufweisen und sich die Rückseiten 6 in entgegengesetzter Richtung zu den Kontaktseiten 7 verjüngen und in den Grundkörper 2 übergehen. Entsprechend sind auch die Formausnehmungen 23 des Untergesenks 21 ausgebildet.

Besonders bevorzugt ist der Stempelkopf 24 derart ausgebildet, dass durch den Formvorgang zwischen der Frontseite 13 und der Oberseite 14 ein innerer Übergangsbereich 15 mit einem Radius Ri ausgebildet ist. Die Formausnehmungen 23 des Untergesenks 21 sind vorzugsweise derart ausgebildet, dass durch den Formvorgang zwischen der Kontaktseite 7 und dem Grundkörper 2 ein äußerer Übergangsbereich 11 mit einem Radius Ra ausgebildet ist.

Der Grundkörper 2 weist bevorzugt eine Öffnung 3 zum Durchführen eines Befestigungsmittels auf, so dass die Führungselemente 4 an gegenüberliegenden Seiten der Öffnung 3 zum Führen eines Exzenterelementes 5 geformt werden.

Alternativ kann im Grundkörper 2 eine Öffnung 3 zum Durchführen eines Befestigungsmittels zeitgleich mit den Führungselementen 4 erzeugt werden. Auch hier werden die Führungselemente 4 an gegenüberliegenden Seiten der Öffnung 3 angeordnet. Durch das gleichzeitige Formen der Öffnung 3 und Führungselemente 4 können zwei Bearbeitungsschritte des Herstellungsverfahrens zusammengeführt werden, was sich vorteilhaft auf die Bearbeitungszeit des Fahrwerkbauteilvorläufers 18 auswirkt.

Das Formen der Führungselemente 4 erfolgt bevorzugt durch einen Kaltformvorgang. Dies ermöglicht kurze Bearbeitungszeiten, eine gute Oberflächenqualität, enge Maßtoleranzen, eine optimale Materialausnutzung sowie eine dauerhafte Verfestigung des Werkstoffs. Auch der Faserverlauf des Materials wird nicht unterbrochen.

Vorzugsweise werden die Oberflächen der Führungselemente 4 nach dem Formvorgang zusätzlich poliert. So wird die Lebensdauer des Fahrwerkbauteils 1 zusätzlich erhöht.

### Bezugszeichen:

- 1 -: Fahrwerkbauteil
- 2 -: Grundkörper
- 3 -: Öffnung
- 4 -: Führungselement
- 5 -: Exzenterelement
- 6 -: Rückseite
- 7 -: Kontaktseite
- 8 -: Bund
- 9 -: Exzenterschraube
- 10 -: Abgeflachter Bereich
- 11 -: äußerer Übergangsbereich
- 12 -: Einbuchtung
- 13 -: Frontseite
- 14 -: Oberseite
- 15 -: innerer Übergangsbereich
- 16 -: Unterseite
- 17 -: unterer Übergangsbereich
- 18 -: Fahrwerkbauteilvorläufer
- 19 -: Umformwerkzeug
- 20 -: Stempel
- 21 -: Untergesenk
- 22 -: Fixierelement
- 23 -: Formaushebungen
- 24 -: Stempelkopf

- A -: Abstand
- B -: Abstand
- F1 -: Kraft
- F2 -: Kraft
- Hk-: Höhe
- Sg -: Materialstärke
- Ri -: innerer Radius
- Ra -: äußerer Radius
- Ru -: unterer Radius
- α -: Winkel

## Patentansprüche

1. Verfahren zur Herstellung eines Fahrwerkbauteils (1), wobei das Verfahren die folgenden Verfahrensschritte umfasst:
- Bereitstellen eines Fahrwerkbauteilvorläufers (18), welcher einen Grundkörper (2) aufweist;
**gekennzeichnet durch** die folgenden Verfahrensschritte:
- Einlegen des Grundkörpers (2) in ein Umformwerkzeug (19) zum Formen von Führungselementen (4), wobei das Umformwerkzeug (19) einen Stempel (20), ein Untergesenk (21) und ein Fixierelement (22) aufweist, und das Untergesenk (21) den zu formenden Führungselementen (4) entsprechende Formausnehmungen (23) aufweist;
- Formen der Führungselemente (4) durch linearen Vorschub des Stempels (20), wobei der Stempel (20) in einem Winkel α zwischen 30° und 60° zum Grundkörper (2) ausgerichtet ist und der Formvorgang bei einem Druck zwischen 5 t und 20 t erfolgt, um das Fahrwerkbauteil (1) zu erhalten.

2. Verfahren nach Anspruch 1, **dadurch gekennzeichnet, dass** der Grundkörper (2) eine Öffnung (3) zum Durchführen eines Befestigungsmittels aufweist und die Führungselemente (4) an gegenüberliegenden Seiten der Öffnung (3) zum Führen eines Exzenterelementes (5) geformt werden.

3. Verfahren nach Anspruch 1, **dadurch gekennzeichnet, dass** im Grundkörper (2) eine Öffnung (3) zum Durchführen eines Befestigungsmittels zeitgleich mit den Führungselementen (4) erzeugt wird, wobei die Führungselemente (4) an gegenüberliegenden Seiten der Öffnung (3) angeordnet sind.

4. Verfahren nach einem der Ansprüche 1 bis 3, **dadurch gekennzeichnet, dass** das Formen der Führungselemente (4) durch einen Kaltformvorgang erfolgt.

5. Verfahren nach einem der Ansprüche 1 bis 4, **dadurch gekennzeichnet, dass** der Formvorgang bei einem Druck zwischen 7,5 t und 13 t erfolgt.

## Claims

1. Method for producing a chassis component (1), wherein the method comprises the following method steps:
- providing a chassis component precursor (18) which has a base body (2);
**characterised by** the following method steps:
- inserting the base body (2) into a forming tool (19) for forming guide elements (4), wherein the forming tool (19) has a punch (20), a lower die (21) and a fixing element (22), and the lower die (21) has form recesses (23) corresponding to the guide elements (4) to be formed;
- forming the guide elements (4) by linear advance of the punch (20), wherein the punch (20) is aligned at an angle a of between 30° and 60° to the base body (2) and the forming process is carried out at a pressure of between 5 t and 20 t in order to obtain the chassis component (1).

2. Method according to claim 1, **characterised in that** the base body (2) has an opening (3) for passing through a fastening means and the guide elements (4) are formed on opposite sides of the opening (3) for guiding an eccentric element (5).

3. Method according to claim 1, **characterised in that** in the base body (2) is created an opening (3) for passing through a fastening means simultaneously with the guide elements (4), wherein the guide elements (4) are arranged on opposite sides of the opening (3).

4. Method according to any one of claims 1 to 3, **characterised in that** the forming of the guide elements (4) is carried out by a cold forming process.

5. Method according to any one of claims 1 to 4, **characterised in that** the forming process takes place at a pressure of between 7.5 t and 13 t.

## Revendications

1. Procédé de fabrication d'un élément de châssis (1), dans lequel le procédé comprend les étapes de procédé suivantes :
- la mise à disposition d'une ébauche (18) d'élément de châssis, qui présente un corps de base (2) ;
**caractérisé par** les étapes de procédé suivantes :
- insertion du corps de base (2) dans un outil de formage (19) pour former des éléments de guidage (4), dans lequel l'outil de formage (19) présente un poinçon (20), une matrice inférieure (21) et un élément de fixation (22), et la matrice inférieure (21) présente des évidements de formage (23) correspondant aux éléments de guidage (4) à former ;
- formage des éléments de guidage (4) par avance linéaire du poinçon (20), dans lequel le poinçon (20) est orienté selon un angle α compris entre 30° et 60° par rapport au corps de base (2), et le processus de formage s'effectue à une pression comprise entre 5t et 20t, afin d'obtenir l'élément de châssis (1).

2. Procédé selon la revendication 1, **caractérisé en ce que** le corps de base (2) présente une ouverture (3) pour le passage d'un moyen de fixation et les éléments de guidage (4) sont formés sur des côtés opposés de l'ouverture (3) pour le guidage d'un élément excentrique (5).

3. Procédé selon la revendication 1, **caractérisé en ce qu'**une ouverture (3) pour le passage d'un moyen de fixation est créée dans le corps de base (2) en même temps que les éléments de guidage (4), dans lequel les éléments de guidage (4) sont disposés sur des côtés opposés de l'ouverture (3).

4. Procédé selon l'une quelconque des revendications 1 à 3, **caractérisé en ce que** le formage des éléments de guidage (4) s'effectue par un processus de formage à froid.

5. Procédé selon l'une quelconque des revendications 1 à 4, **caractérisé en ce que** le processus de formage s'effectue à une pression comprise entre 7,5 t et 13 t.
